# EUROPEAN PATENT APPLICATION

(11) **EP 4 610 700 A1**
(43) Date of publication of application: **03.09.2025**
(21) Application number: 23881595.5
(22) Date of filing: 28.09.2023
(51) Int. Cl.: G01V 9/00, G01S 17/04

(54) **AUTONOMOUS INSPECTION METHOD AND APPARATUS FOR INSPECTION DEVICE, AND ELECTRONIC DEVICE**

(30) Priority: 28.10.2022 CN 202211335130
(71) Applicant: Nuctech Company Limited, TongFang Building, Shuangqinglu, Haidian District Beijing 100084 (CN)
(72) Inventor: LI, Jian, Beijing 100084 (CN); WANG, Yongming, Beijing 100084 (CN); YUAN, Xin, Beijing 100084 (CN); ZHU, Xinbo, Beijing 100084 (CN); RAN, Zhansen, Beijing 100084 (CN); NI, Xiulin, Beijing 100084 (CN)
(74) Representative: Cabinet Beau de Loménie
(86) International application number: PCT/CN2023/122437
(87) International publication number: WO 2024/088016

(57) **Abstract**

The present disclosure provides an autonomous inspection method for an inspection device. The autonomous inspection method comprises the following steps: acquiring position information of the inspection device; detecting whether an object to be inspected is present in an inspection region; when the object is present in the inspection region, predetermining, in combination with the position information of the inspection device, the orientation of the object relative to the inspection device; according to the predetermined orientation, enabling the inspection device to move in a first direction, and checking whether the object is present in a second direction; and when the object is detected in the second direction, enabling the inspection device to move in the second direction, and inspecting the object.

## Description

This application claims the benefit of priority to Chinese Patent Application No. 202211335130.1, filed on October 28, 2022. The entire contents of this application are hereby incorporated herein by reference.

### TECHNICAL FIELD

The present disclosure relates to a field of security inspection technology, and in particular, to an autonomous inspection method of an inspection device, an autonomous inspection apparatus of an inspection device, a device, a medium, and a program product.

### BACKGROUND

At present, after cargo, containers or vehicles loaded with cargo or containers are parked as objects to be inspected in an inspection site (such as a port yard), the locations of the objects to be inspected are usually determined manually, or the objects to be inspected are parked at a designated location for centralized scanning and inspection. The inspection device cannot automatically acquire the locations of the objects to be inspected in the inspection site and automatically inspect the objects to be inspected, therefore the degree of intelligence is low, and if the inspection region is large and the objects to be inspected are relatively scattered, the scanning efficiency is low and a large amount of labor costs are required.

### SUMMARY

The present disclosure aims to solve at least one of the technical problems existing in the related art.

For example, an inspection device of the present disclosure may automatically determine whether an object to be inspected exists in an inspection region or not, and when it is determined that there is an object to be inspected, the inspection device may implement autonomous inspection of the object to be inspected. The whole process does not require human participation, which saves labor costs.

In order to achieve the above-mentioned purpose, a first aspect of the present disclosure provides an autonomous inspection method of an inspection device, the inspection device is movably provided in an inspection region, the inspection region includes a plurality of scanning channels, and the autonomous inspection method includes: acquiring a location information of the inspection device; detecting whether an object to be inspected exists in the inspection region or not; pre-determining an orientation of the object to be inspected relative to the inspection device based on the location information of the inspection device, in response to the object to be inspected existing in the inspection region; moving the inspection device in a first direction according to the pre-determined orientation, and determining whether the object to be inspected exists in a second direction or not, where the second direction is the same as an extension direction of the scanning channel; and moving the inspection device in the second direction and inspecting the object to be inspected, in response to the object to be inspected being detected in the second direction.

According to the autonomous inspection method of the present disclosure, by pre-determining the orientation of the object to be inspected in the inspection region, and then automatically guiding the inspection device and further positioning the object to be inspected according to the pre-determined orientation, the intelligent positioning and scanning operation of the inspection device in the inspection region may be implemented, so as to improve the inspection efficiency of the object to be inspected, reduce the manual operation processes and labor costs, and provide a solution for implementing unmanned intelligent inspection.

Further, the autonomous inspection method further includes: before detecting whether the object to be inspected exists in the inspection region or not, creating a topological map according to a coverage area of the inspection region; and setting nodes at two ends of each of the plurality of scanning channels, where a moving path of the inspection device is guided by using the nodes.

Further, the detecting whether an object to be inspected exists in the inspection region or not includes: scanning the inspection region by a first laser radar device on the inspection device, where the first laser radar device is configured as a multi-line laser transmitter; and determining that the object to be inspected exists in the inspection region in response to an obstruction being within a scanning range.

Further, the pre-determining an orientation of the object to be inspected relative to the inspection device based on the location information of the inspection device in response to the object to be inspected existing in the inspection region includes: determining the orientation of the object to be inspected relative to the inspection device through an orientation blocked by the obstruction; reading scanning channels in the orientation according to the location information of the inspection device; and acquiring the nodes of the scanning channels in the orientation.

Further, the moving the inspection device in a first direction according to the pre-determined orientation and determining whether the object to be inspected exists in a second direction or not includes: reading first target nodes in the first direction of the inspection device among the nodes of the scanning channels in the orientation one by one; controlling the inspection device to move in the first direction according to the first target node; and determining whether the object to be inspected exists in the scanning channel or not by a second laser radar device on the inspection device.

Further, the moving the inspection device in the second direction and inspecting the object to be inspected in response to the object to be inspected being detected in the second direction includes: acquiring a second target node in the second direction of the inspection device, in response to the object to be inspected being detected in the scanning channel; and controlling the inspection device to move in the second direction according to the second target node, and inspecting the object to be inspected.

Further, the autonomous inspection method further includes: before or when the inspection device moves in the second direction, adjusting a wheel angle of the inspection device according to an offset distance of the inspection device, where the offset distance is calculated by a baseline connecting the nodes at two ends of the scanning channel and a current location information of the inspection device.

Further, the autonomous inspection method further includes: measuring a width of the object to be inspected by a third laser radar device on the inspection device; measuring a height of the object to be inspected by a fourth laser radar device on the inspection device; and moving the inspection device to a node of a scanning channel where the object to be inspected is located, when the width of the object to be inspected exceeds a preset size and/or the height of the object to be inspected exceeds a preset size.

Further, the topological map includes a parking point for parking the inspection device.

A second aspect of the present disclosure provides an autonomous inspection apparatus of an inspection device, the inspection device is movably provided in an inspection region, and the apparatus includes: an acquisition module configured to acquire a location information of the inspection device; a detection module configured to detect whether an object to be inspected exists in the inspection region or not; a pre-determining module configured to pre-determine an orientation of the object to be inspected relative to the inspection device based on the location information of the inspection device, in response to the object to be inspected existing in the inspection region; a determining module configured to move the inspection device in a first direction according to the pre-determined orientation, and determine whether the object to be inspected exits in a second direction or not, where the second direction is the same as an extension direction of the scanning channel; and a movement module configured to move the inspection device in the second direction and inspect the object to be inspected, in response to the object to be inspected being detected in the second direction.

A third aspect of the present disclosure provides an electronic device, including: one or more processors; a memory configured to store one or more programs, where the one or more programs, when executed by the one or more processors, are configured to cause the one or more processors to implement the above autonomous inspection method.

A fourth aspect of the present disclosure provides a computer readable storage medium having executable instructions stored thereon, where the instructions, when executed by a processor, are configured to cause the processor to implement the above autonomous inspection method.

A fifth aspect of the present disclosure provides a computer program product containing a computer program, wherein the computer program, when executed by a processor, is configured to cause the process to implement the above autonomous inspection method.

### BRIEF DESCRIPTION OF THE DRAWINGS

The above contents and other objectives, features and advantages of the present disclosure will be clear through the following descriptions of embodiments of the present disclosure with reference to the drawings. In the drawings:
FIG. 1 schematically shows an application scene diagram of an autonomous inspection method according to embodiments of the present disclosure;
FIG. 2 schematically shows a flow chart of an autonomous inspection method according to embodiments of the present disclosure;
FIG. 3 schematically shows a schematic diagram of pre-positioning and coarse-positioning according to embodiments of the present disclosure;
FIG. 4 schematically shows a flow chart of creating a topological map according to embodiments of the present disclosure;
FIG. 5 schematically shows a schematic diagram of a layout of an inspection region according to embodiments of the present disclosure;
FIG. 6 schematically shows a flow chart of operation and control of an inspection device according to embodiments of the present disclosure;
FIG. 7 schematically shows a front view of an inspection device according to embodiments of the present disclosure;
FIG. 8 schematically shows a top view of an inspection device according to embodiments of the present disclosure;
FIG. 9 schematically shows a structural block diagram of an autonomous inspection apparatus according to embodiments of the present disclosure; and
FIG. 10 schematically shows a block diagram of an electronic device suitable for implementing an autonomous inspection method according to embodiments of the present disclosure.

### DETAILED DESCRIPTION OF EMBODIMENTS

Embodiments of the present disclosure will be described below with reference to accompanying drawings. However, it should be understood that these descriptions are just exemplary and are not intended to limit the scope of the present disclosure. In the following detailed description, for ease of interpretation, many specific details are set forth to provide comprehensive understanding of embodiments of the present disclosure. However, it is clear that one or more embodiments may also be implemented without these specific details. In addition, in the following description, descriptions of well-known structures and technologies are omitted to avoid unnecessarily obscuring concepts of the present disclosure.

Terms are used herein for the purpose of describing specific embodiments only and are not intended to limit the present disclosure. The terms "including", "containing", etc. used herein indicate the presence of the feature, step, operation and/or component, but do not exclude the presence or addition of one or more other features, steps, operations or components.

All terms used herein (including technical and scientific terms) have the meanings generally understood by those skilled in the art, unless otherwise defined. It should be noted that the terms used herein may be interpreted to have meanings consistent with the context of the specification, and shall not be interpreted in an idealized or overly rigid manner.

In a case of using the expression similar to "at least one of A, B or C", it may explained according to the meaning of the expression generally understood by those skilled in the art (for example, "a system including at least one of A, B or C" may include but is not limited to a system including A alone, a system including B alone, a system including C alone, a system including A and B, a system including A and C, a system including B and C, and/or a system including A, B and C).

The inspection device may be an inspection device carried by a vehicle body, or a self-propelled inspection device without a cab, which may move freely in the inspection region.

After the cargo, container or vehicle loaded with cargo or container is parked in the inspection site (such as a port yard) as the object to be inspected, the current method to inspect the object to be inspected is usually to manually determine the location of the object to be inspected, and then send a movement instruction to the inspection device to control the inspection device to move to the surrounding of the object to be inspected and inspect the object to be inspected. When the objects to be inspected are distributed in various locations in the inspection region, the operator is required to determine the distances between the objects to be inspected and the inspection device one by one and the orientations of the objects to be inspected, and send instructions to the inspection device. This manner consumes a lot of labor costs and has low inspection efficiency for the object to be inspected.

Based on the above, there is another method at present, which is to collect the objects to be inspected distributed in various locations, and then place the objects to be inspected in a designated location, and scan and inspect the objects to be inspected centrally by the inspection device. This process involves manual handling, moving and placing the objects the objects to be inspected in the location, etc., which also requires a lot of manpower and has a low degree of intelligence.

In order to improve the automation level and the intelligence level of scanning inspection, the present disclosure provides an autonomous inspection method, in which the inspection device may perform autonomous movement and scanning inspection after automatically detecting and checking the objects to be inspected in the inspection region, and acquiring the locations of the objects to be inspected, so as to complete multiple rows of continuous scanning for the objects to be inspected, thereby improving the inspection speed of the object to be inspected, and as no human participation is required in the entire process, labor costs are saved.

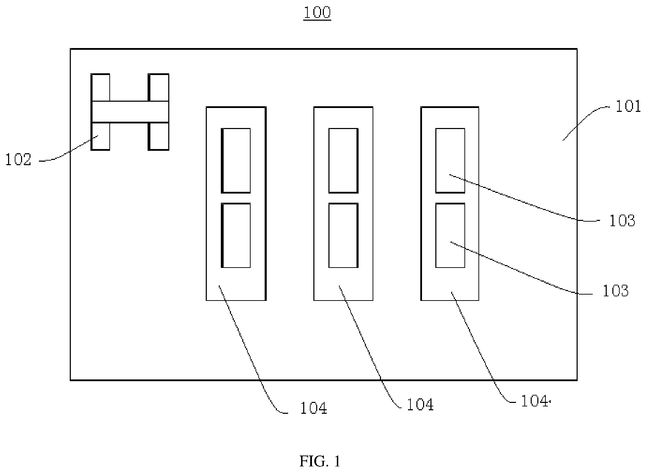

FIG. 1 schematically shows an application scene diagram of an autonomous inspection method according to embodiments of the present disclosure.

As shown in FIG. 1, the application scene 100 according to this embodiment may include a yard 101, an inspection device 102, an object to be inspected 103, and a scanning channel 104. Three scanning channels 104 are arranged in the yard 101, and two objects to be inspected 103 are placed in each scanning channel 104. It should be noted that the scanning channel 104 is usually a scanning operating region of the yard 101 that has been pre-demarcated. In addition, the scanning channels 104 are spaced a predetermined distance apart from each other. The inspection device 102 may move freely in the yard 101. In the process of inspecting the object to be inspected 103, the inspection device 102 may straddle one of the scanning channels 104, move in the extension direction of the scanning channel 104, and perform a scanning inspection on the object to be inspected 103 in the scanning channel 104.

The autonomous inspection method of the present disclosure may be applied to the inspection of the object to be inspected in the scanning channel within a certain inspection region. It should be understood that in FIG. 1, the inspection region is the yard 101 for schematic purposes only, and the number of scanning channels 104 in the inspection region and the number of objects 103 to be inspected in each scanning channel 104 are also for schematic purposes only, and there are no special restrictions thereon. In addition, the inspection region may include a plurality of scanning channels distributed in one region, or may include a plurality of scanning channels distributed in a plurality of regions. For example, as shown in FIG. 1, three scanning channels 104 are arranged in parallel, and two objects 103 to be inspected are arranged in line in each scanning channel 104, but it should be understood that this is also for schematic purposes. Generally, as long as the objects 103 to be inspected are not placed outside the scanning channel 104, there are no special restrictions on the extension direction of each scanning channel 104 (i.e., the second direction described below) and the placement of the objects to be inspected.

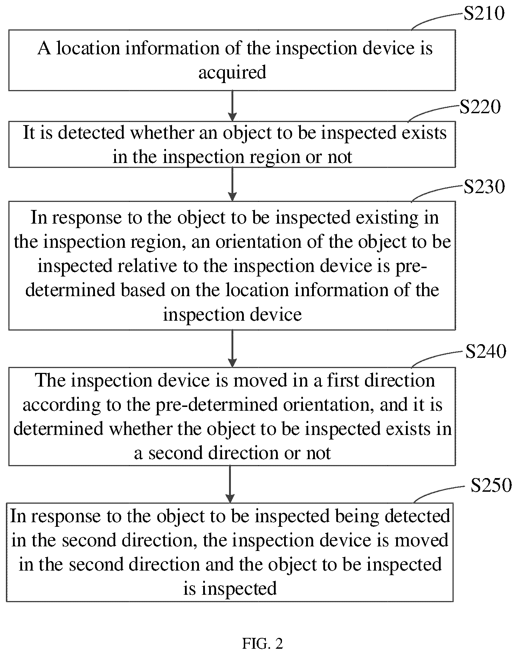

The following will describe the autonomous inspection method of embodiments of the present disclosure in detail with reference to FIGS. 2 to 6 based on the scene described with reference to FIG. 1.

FIG.2 schematically shows a flow chart of an autonomous inspection method according to embodiments of the present disclosure. The inspection device is movably provided in an inspection region, and the inspection region includes a plurality of scanning channels.

As shown in FIG. 2, in the embodiment, the method includes operations S210 to S250.

In operation S210, a location information of the inspection device is acquired.

The autonomous inspection method of embodiments of the present disclosure may autonomously acquire the location of an object to be inspected, and then drive the inspection device to move to the designated location for scanning inspection. Therefore, the first step is to acquire the location information of the inspection device, and then determine the orientation of the object to be inspected relative to the inspection device.

In this step, a positioning device, such as a differential GPS device, may be installed on the inspection device to acquire the current location information of the inspection device in real time.

In operation S220, it is detected whether an object to be inspected exists in the inspection region or not.

In order to autonomously determine whether there is an object to be inspected in the inspection region, specifically, a first laser radar device on the inspection device may be used to scan the entire or a part of the inspection region. The first laser radar device is configured as a multi-line laser transmitter. The first laser radar device is arranged on the outer edge of the inspection device, and emits a laser beam to the outside of the inspection device. When there is an obstruction within the scanning range, it is determined that there is the object to be inspected in the inspection region.

Generally, as the inspection region is large and the location of the object to be inspected may be far away from the inspection device, the relative location information of the object to be inspected may not be accurately located using only the first laser radar device. In this way, the present disclosure adopts a combination of pre-positioning and coarse-positioning. The approximate orientation of the object to be inspected relative to the inspection device is determined through pre-positioning, and then the location of the object to be inspected is further located in the movement of the inspection device to the approximate orientation. The operation S230 is pre-positioning, and the operation S240 is coarse-positioning.

In operation S230, in response to the object to be inspected existing in the inspection region, an orientation of the object to be inspected relative to the inspection device is pre-determined based on the location information of the inspection device.

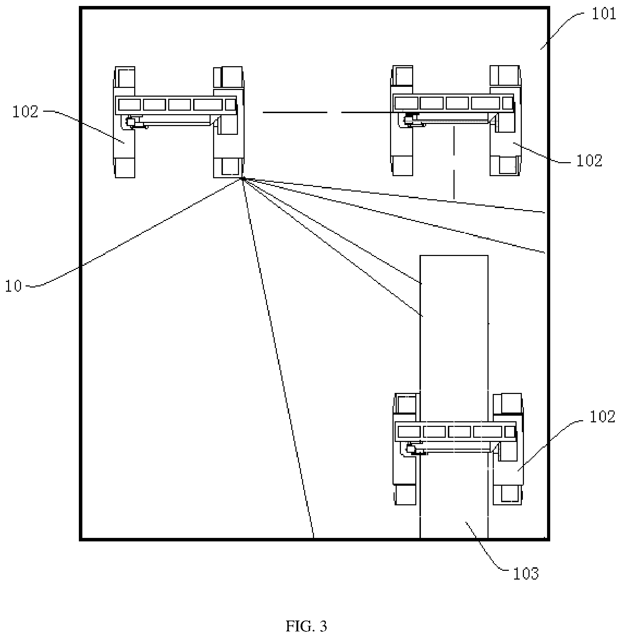

As shown in FIG. 3, the first laser radar device on the inspection device emits laser light to the outside of the inspection device, and the processing device in the autonomous inspection system may determine the approximate orientation of the object to be inspected relative to the inspection device based on a plurality of laser beams.

It should be understood that the orientation of the object to be inspected relative to the inspection device may be any orientation relative to the outside of the inspection device.

In operation S240, the inspection device is moved in a first direction according to the pre-determined orientation, and it is determined whether the object to be inspected exists in a second direction or not. The second direction is the same as an extension direction of the scanning channel.

The relative orientation between the inspection device and the object to be inspected in the inspection region, that is, any orientation, may be arbitrarily decomposed and represented by two directions (for example, the first direction and the second direction). In other words, there may be any path from the inspection device to the object to be inspected. For the convenience of description, in the present disclosure, the second direction is the same as the extension direction of the scanning channel, and the first direction is perpendicular to the second direction.

In an embodiment, this step should be understood as the second laser radar device determining whether there is the object to be inspected in the scanning channel when the inspection device moves in the first direction.

Specifically, as shown in FIG. 3, for the up, down, left and right in the figure, the left-right direction is the first direction, and the up-down direction is the direction in which the scanning channel extends, which is the second direction. After determining that the object to be inspected is in the lower-right direction of the inspection device through pre-positioning, the controller instructs the inspection device to move to the right, while the laser emitted by the second laser radar device determines whether there is an object to be inspected in the up-down direction (i.e., the second direction). It should be noted that the second laser radar device may be arranged on the inner side of the channel of the inspection device. Usually, when the second laser radar device emits laser, the first laser radar device may not emit laser.

In another embodiment, this step should be understood as the inspection device moving to the designated location in the first direction and stopping, and then determining whether there is an object to be inspected in the scanning channel through the second laser radar device. The "designated location" may be a location preset by the operator, or a location automatically generated by the autonomous inspection system according to the setting.

In operation S250, when it is determined or detected that the object to be inspected exists in the second direction, the inspection device is moved in the second direction, and the object to be inspected is inspected.

In combination with operation S240, when it is determined or detected by the second laser radar device that the object to be inspected exists in the second direction, it means that the inspection device and the object to be inspected are roughly in the same up-down direction, that is, the inspection device may determine the scanning channel in which the object to be inspected is located, thereby achieving coarse-positioning of the object to be inspected.

After the second laser radar device determines or detects that the object to be inspected exists in the second direction, the controller enables the inspection device to move in the second direction (scanning channel). When the object to be inspected is placed in the middle of the inspection device, the object to be inspected is scanned and inspected.

For the inspection process of the object to be inspected, the scanning inspection mode may be automatically turned on in the movement of the inspection device, or the inspection device may be manually controlled by the operator when the inspection device moves near the object to be inspected.

According to the autonomous inspection method of the present disclosure, by pre-determining the orientation of the object to be inspected in the inspection region (pre-positioning), and then automatically guiding and further positioning the object to be inspected according to the pre-determined orientation (coarse-positioning), the inspection device may implement intelligent positioning and scanning operation in the inspection region, so as to improve the inspection efficiency of the object to be inspected, reduce the manual operation process and labor costs, and provide a solution for implementing unmanned intelligent inspection in the future.

According to an embodiment of the present disclosure, creating a topological map is conducive to the location positioning and mobile calculation of the inspection device. Therefore, before detecting whether there is an object to be inspected in the inspection region, a topological map may be created for the inspection region and the scanning channel in the inspection region. For example, a topological map containing longitude and latitude is created.

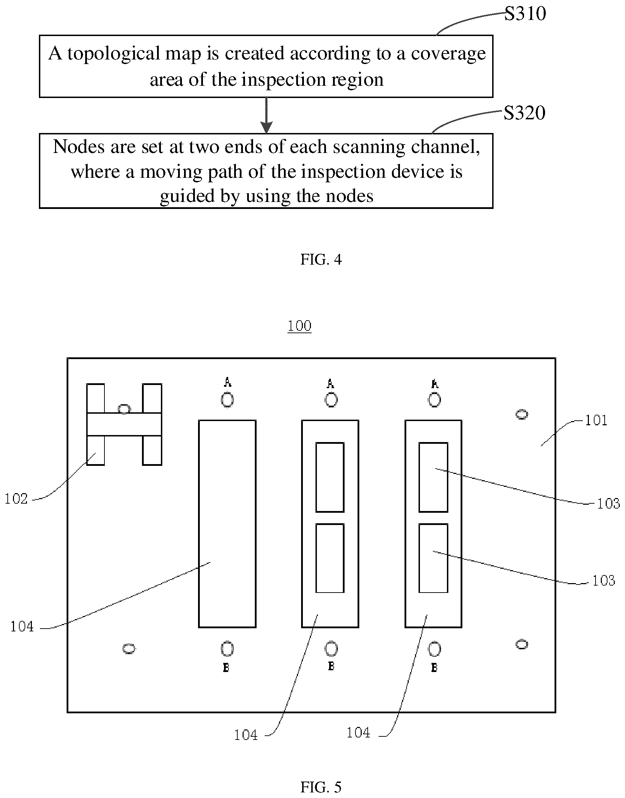

FIG. 4 schematically shows a flow chart of creating a topological map according to embodiments of the present disclosure.

As shown in FIG. 4, in this embodiment, the method includes operations S310 to S320.

In operation S310, a topological map is created according to a coverage area of the inspection region.

A topological map server is provided in the autonomous inspection system, the topological map server may create the topological map for the inspection region. In an embodiment, the topological map may cover the entire inspection region. For the convenience of description, the extension direction of the longitude or latitude in the topological map may be set to be consistent with the extension direction of the scanning channel. It should be noted that, in a topological map including, for example, longitude and latitude, the extension direction of the scanning channel may be arbitrary.

In a method of creating the topological map, the topological road network information may be extracted and established based on Google Earth, which may directly extract the required road network information from the satellite map, and then quickly create the topological map of the inspection region.

In another method of creating the topological map, a topological map may be obtained through vSLAM or SOM graph algorithm, an image in a predetermined region may be acquired by using a camera or other image acquisition device to obtain the desired road network information, and then the topological map is created, the predetermined region may be the entire inspection region, or the part of the inspection region in which the object to be inspected is placed. In an embodiment, a robot with an image acquisition device moves arbitrarily in the predetermined region, the location coordinates of the robot may be obtained at regular sampling times or in real time, and then a set of location coordinate points is formed, the set of location coordinate points is used to train the SOM algorithm to obtain a preliminary topological map, and then, the neurons in the obstructions and the line segments crossing the obstructions are removed to obtain the final topological map. The neurons in the obstructions are inaccessible points for the robot. The obstruction may be understood as the object to be inspected in the present disclosure.

In operation S320, nodes are set at two ends of each scanning channel, and the node is used to guide a moving path of the inspection device.

The object to be inspected is stored in the scanning channel. The purpose of the inspection device moving in the first direction is to detect whether the object to be inspected is stored in the scanning channel. Nodes are set at two ends of each scanning channel (in other words, the coordinates of the topological map, such as longitude and latitude coordinates, are set at two ends of each scanning channel). The node may be used to guide the inspection device, so that the inspection device may move directly and quickly from the current location coordinates to the coordinates of the node, and the scanning channel where the node is located is checked.

It should be understood that in the topological map with longitude and latitude, the coordinates of each node include unique longitude and latitude coordinates. The creating of the topological map is conducive to the rapid movement of the inspection device, thereby reducing the time wasted in determining whether there is an object to be inspected in a non-scanning channel, and improving the efficiency of the positioning and checking of the object to be inspected.

In addition, the nodes on two sides of each scanning channel are usually set at a predetermined distance from the object to be inspected in the extension direction of the scanning channel. In addition, the nodes in the topological map may be set according to, for example, the relative location of the object to be inspected and the number of objects to be inspected acquired by the first laser radar device, or according to, for example, the site planning of the yard.

After the topological map server provides the topological map to the processing device described later, some operations in the autonomous inspection method may be refined. For example, in the steps of operation S230 to operation S250, the processing device may directly send one or more nodes to the inspection device to form a planned path to guide the movement of the inspection device, so that the inspection device may check the objects to be inspected in the scanning channels in order. Specifically, the processing device may combine the relevant knowledge of computer graph theory to generate an adjacency matrix from the static undirected topological map road network, and learn from the Dijkstra path planning algorithm to implement the path planning.

The operation steps for pre-positioning the object to be inspected using the topological map are as follows.

After the first laser radar device on the inspection device emits a laser beam, the orientation of the object to be inspected relative to the inspection device is determined through the orientation in which the laser beam is blocked by the obstruction. The positioning device acquires the location information of the inspection device at this moment, and the processing device acquires all the scanning channels and nodes corresponding to the scanning channels in the orientation according to the location information and the determined orientation.

The above pre-positioning operation step is described with reference to FIG. 5. The left-right direction is the first direction, and the up-down direction is the second direction. The topological map includes three scanning channels and a total of 6 nodes at two ends of the scanning channels. There are objects to be inspected in the second scanning channel and the third scanning channel, and the inspection device is in the upper-left corner. The first laser radar device on the inspection device pre-positions the object to be inspected outside the inspection device, and the result is that there is an object to be inspected in the lower-right corner of the current location of the inspection device. The location information of the inspection device is obtained in real time according to the positioning device on the inspection device, and all obtainable nodes existing on the right side of the inspection device may be calculated.

In an embodiment, the longitude of the topological map is the direction of the scanning channel, the latitude of the topological map is the direction perpendicular to the scanning channel, nodes on the first end of all scanning channels and nodes on the second end of all scanning channels are on the same latitude, and the nodes at two ends of the same scanning channel are on the same longitude. All nodes on the same latitude on the right side of the inspection device, that is, all nodes on the right side with the same latitude as the location coordinate of the inspection device, are used as obtainable nodes.

The operation steps for coarse-positioning of the object to be inspected using the topological map are as follows.

After all scanning channels and nodes corresponding to the scanning channels are obtained by pre-positioning, the processing device reads the nodes one by one according to the principle of reading at the closest distance. Among the nodes obtained by pre-positioning, the node closest to the inspection device in the first direction is currently used as a first target node. The processing device sends the information of the first target node to the controller, and the controller controls the inspection device to move in the first direction. After the inspection device reaches the first target node, the second laser radar device on the inspection device is used to determine whether there is an object to be inspected in the scanning channel. When the object to be inspected is detected in the scanning channel, the processing device acquires the node at the second end of the scanning channel where the inspection device is located (the node in the second direction of the inspection device), and uses this node as a second target node. The processing device sends the information of the second target node to the controller, and the controller controls the inspection device to move in the second direction.

The above-mentioned coarse-positioning operation step is described with reference to FIG. 5. The processing device acquires the node closest to the right side of the inspection device as the first target node and sends the first target node to the controller. The controller controls the inspection device to move from the current location to the first target node. The inspection device at the first target node uses the second laser radar device to determine whether there is an object to be inspected in the scanning channel.

If there is no object to be inspected in the scanning channel, continue to acquire the node closest to the right side of the current inspection device (the inspection device at the first target node), and use that node as the first target node to repeat the above step. This process stops the operation of acquiring the next closest node when the inspection device has gone through all the nodes provided in the pre-positioning, that is, when the current inspection device has moved to the rightmost node, or when it is determined that there is an object to be inspected in the scanning channel. If the object to be inspected is detected in the scanning channel, the processing device acquires the node at the second end of the scanning channel in which the first target node is located, and sends that node as the second target node to the controller, and the controller controls the inspection device to move to the second target node.

In an embodiment, when the object to be inspected is detected in the scanning channel, a node with the same longitude as the current location coordinate of the inspection device is acquired.

The inspection device of the present disclosure may move in any direction by guiding the path of the inspection device through the nodes, and the movement of the inspection device is achieved by adjusting the wheel in the inspection device. However, the wheel may deviate in the movement. For example, if the inspection device does not move according to the set location in the movement along the scanning channel, the distance between the imaging system on the inspection device and the object to be inspected may change, and the final imaging result may be affected.

Therefore, the autonomous inspection method further includes correcting or rectifying a travel route of the inspection device in the second direction.

In an embodiment, the inspection device adjusts the deflection angle of the wheel before moving in the second direction. This scheme is a one-time adjustment, which may roughly adjust the travel route of the inspection device to the desired route when inspecting the object to be inspected. The calculation amount is small, but the accuracy is not high.

In another embodiment, when the inspection device moves in the second direction, the deflection angle of the wheel is adjusted in real time. This process requires continuous acquisition of the offset distance of the inspection device. Although the calculation amount is large, the travel route is more consistent with the desired route and the accuracy is improved.

In both of the above schemes, the wheel angle of the inspection device may be adjusted according to the offset distance of the inspection device. The offset distance is calculated by the baseline connecting the nodes at two ends of the scanning channel and the current location information of the inspection device.

Both of the above schemes for correcting the wheel angle may enable the inspection device to move in the second direction according to the desired route and inspect the object to be inspected.

The coordinates of the nodes at two ends of the scanning channel where the inspection device is located are acquired, and the baseline of the inspection device is fitted according to the coordinates of the nodes, that is, the route to be traveled. Combined with the current coordinate points of the inspection device, the slope and intercept of the timing offset are fitted based on the least square method, the vertical offset distance between the inspection device and the baseline is predicted, and the angle of wheel to be adjusted is output.

According to an embodiment of the present disclosure, as the inspection device is straddling the object to be inspected for scanning inspection in the movement in the second direction, it is preferred to first detect the width and height of the object to be inspected to determine whether the mobile traffic standard of the inspection device is met, thereby preventing the inspection device from being damaged by collision or jamming. The autonomous inspection method further includes the followings.

In the movement in the second direction, the width of the object to be inspected is measured by a third laser radar device on the inspection device, and the height of the object to be inspected is measured by a fourth laser radar device on the inspection device. When the width and/or height of the object to be inspected exceeds the preset size, the inspection device retreats to the node of the scanning channel where the object to be inspected is located.

That is, the third laser radar device and the fourth laser radar device measure the width and height of the object to be inspected, respectively. When the width and height are both smaller than the preset size, the inspection device may pass normally. If any one of the width and height exceeds the preset size, the inspection device may not pass.

According to an embodiment of the present disclosure, the topological map further includes a parking point used to park the inspection device. The parking point may also be regarded as a node in the topological map.

The parking point may be used as a placing point for the inspection device in a non-operating state. As shown in FIG. 5, the placing points may be set at the four corners of the inspection region, so that it easier for the inspection device to move in two directions along the longitude and latitude in initial operation.

Preferably, the parking point is on the same longitude or latitude as the nearest node.

In view of the autonomous inspection method of the present disclosure, the present disclosure further provides an autonomous inspection system suitable for autonomous inspection of an inspection region. The inspection region includes a plurality of scanning channels, and the autonomous inspection system includes: an inspection device, a first laser radar device 10, and a second laser radar device 20.

Specifically, the inspection device is movably arranged in the inspection region. The first laser radar device 10 and the second laser radar device 20 are both arranged on the inspection device. The first laser radar device 10 is used to detect whether there is an object to be inspected in the inspection region, and the second laser radar device 20 is used to determine whether there is an object to be inspected in the scanning channel. The scanning channel includes a first end and a second end, and each of the first end of the scanning channel and the second end of the scanning channel is provided with a node, and the node is used to guide the moving path of the inspection device when the inspection device determines that the object to be inspected exists.

As shown in FIG. 5, the inspection region includes three scanning channels and a total of 6 nodes at two ends of the scanning channels. The first end of the scanning channel is point A, the second end of the scanning channel is point B, there are objects to be inspected in the second scanning channel and the third scanning channel, and the inspection device is in the upper-left corner.

The first laser radar device 10 on the inspection device performs pre-positioning on the object to be inspected outside the inspection device, and then the second laser radar device 20 on the inspection device performs coarse-positioning on the object to be inspected. The inspection device moves according to the location information of the node.

According to the autonomous inspection system of the present disclosure, the location of the object to be inspected may be determined by the first laser radar device 10 and the second laser radar device 20, and the moving path of the inspection device is guided through the node, so as to implement the automatic inspection process of the inspection device in the inspection region, improve the inspection efficiency, reduce the manual operation process and labor cost, and provide a solution for implementing unmanned intelligent inspection.

According to an embodiment of the present disclosure, the autonomous inspection system further includes: a topological map server, used to create a topological map in the inspection region and provide the topological map and node information on the topological map to the processing device.

In an embodiment, the topological map includes longitude and latitude, and the extension direction of the longitude or latitude is consistent with the extension direction of the scanning channel. Creating the topological map is conducive to the location positioning and mobile calculation of the inspection device, and the topological map may cover the entire inspection region. For the convenience of description, the extension direction of the longitude or latitude in the topological map is set to be consistent with the extension direction of the scanning channel.

According to an embodiment of the present disclosure, the plurality of scanning channels are arranged at intervals in the first direction, and the nodes on the first ends of the plurality of scanning channels are arranged at intervals in the first direction, and the nodes on the second ends of the plurality of scanning channels are also arranged at intervals in the first direction. In any scanning channel, the node at the first end and the node at the second end are arranged in the second direction.

As shown in FIG. 5, the inspection region includes three scanning channels, the first end of the scanning channel is point A, the second end of the scanning channel is point B, the three A points are arranged at intervals in the first direction, and the three B points are arranged at intervals in the first direction. In the same scanning channel, the A point on the first end and the B point on the second end are in the second direction, which is conducive to reducing the amount of calculation in the calculation process, and there is no need to calculate the angle that the inspection device needs to turn every time. Meanwhile, the inspection device only needs to move in the first direction or the second direction to achieve the purpose of autonomous inspection of the present disclosure, which simplifies the process. It should be understood that the autonomous inspection system in embodiments is also suitable for autonomous inspection of the inspection region with scanning channels arranged in any direction.

According to an embodiment of the present disclosure, the autonomous inspection system further includes: a positioning device 30, a processing device and a controller.

Specifically, the positioning device 30 is arranged on the inspection device, and the positioning device 30 is used to determine the location information of the inspection device on the topological map.

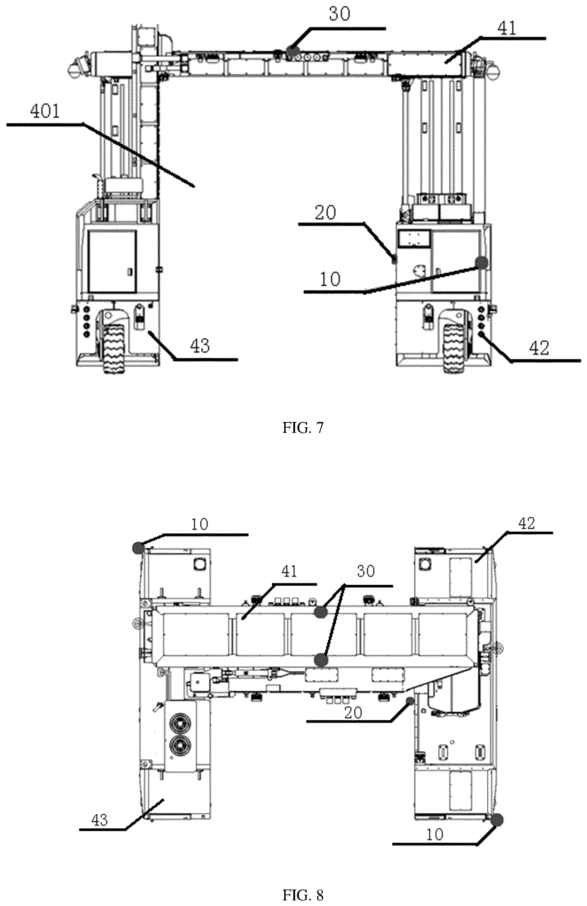

The positioning device 30 is provided as shown in FIGS. 7 and 8, and may be a GPS positioning device of model XW-SC3663, which may provide the location, speed, time, heading and pitch angle information of the vehicle (inspection device). The inspection device of the present disclosure adopts dual-antenna positioning. In the top view of the inspection device shown in FIG, 8, the installation positions of two antennas are marked.

The processing device is connected to the positioning device 30 for communication, and the processing device is used to acquire the node of the inspection device in the first direction or the second direction when the object to be inspected is detected and checked.

The processing device may be understood as being used to process the offset distance, movement and node acquisition of the inspection device. After acquiring the node information, the processing device sends an instruction to the controller.

The controller is electrically connected to the inspection device, and is used to control the movement and rotation/steering of the inspection device after receiving the instruction from the processing device.

According to an embodiment of the present disclosure, the inspection device includes: an arm 41, a first vehicle body 42 and a second vehicle body 43.

The arm 41 is provided with a positioning device 30, and the first vehicle body 42 and the second vehicle body 43 are respectively provided at two ends of the arm 41. The first vehicle body 42, the arm 41 and the second vehicle body 43 are sequentially connected to define a passage 401 that may be used to scan the object to be inspected. The controller controls the movement and rotation of the first vehicle body 42 and the second vehicle body 43. When the inspection device performs the inspection, the controller drives the first vehicle body 42 and the second vehicle body 43 so as to place the object to be inspected in the passage 401.

As shown in FIG. 7, one end of the arm 41 is connected to the first vehicle body 42, and the other end of the arm 41 is connected to the second vehicle body 43. The first vehicle body 42 and the second vehicle body 43 are equipped with wheels that drive the inspection device to rotate and move, and the controller may control the wheels.

The first vehicle body 42, the arm 41 and the second vehicle body 43 are sequentially connected to define the passage 401. When the inspection device moves in the second direction to inspect the object to be inspected, the first vehicle body 42 is on one side of the object to be inspected, the second vehicle body 43 is on the other side of the object to be inspected, and the arm 41 is above the object to be inspected. It should be understood that the inspection device straddles the object to be inspected and passes through the object to be inspected in a "riding" posture.

It should be noted that the first vehicle body 42 and the second vehicle body 43 may not be distinguished in location in the movement.

According to an embodiment of the present disclosure, the first laser radar device 10 is arranged on the outer side of the first vehicle body 42 and/or the outer side of the second vehicle body 43, and the second laser radar device 20 is arranged on the inner side of the first vehicle body 42 or the second vehicle body 43, and the coverage range of each of the first laser radar device 10 and the second laser radar device 20 is 360°.

It should be noted that the coverage range of the first laser radar device 10 may be understood as a numerical range with the laser generating point of the first laser radar device 10 as the center and a horizontal field of view angle of 360°. The coverage range of the second laser radar device 20 is similar.

In an embodiment, the first laser radar device 10 and the second laser radar device 20 of the present disclosure may be a 16-line mechanical laser radar of model RS-Helios-16P.

The first laser radar device 10 is used to detect whether there is an object to be inspected in the inspection region. The inspection device needs to detect the entire inspection region in a stopped state. The first laser radar device 10 is arranged on the outer side of the first vehicle body 42 and/or the outer side of the second vehicle body 43 to detect the entire inspection region.

The second laser radar device 20 may be used to determine whether there is an object to be inspected in the scanning channel when the inspection device stops at a node of the scanning channel or moves in the first direction. The installation location of the second laser radar device 20 is shown in FIGS. 7 and 8, and the installation location may be the inner side of the second vehicle body 43. The second laser radar device 20 may be installed on one of the walls of the passage 401 defined by the first vehicle body 42, the arm 41 and the second vehicle body 43.

According to an embodiment of the present disclosure, the first laser radar device 10 includes two first laser radar sub-devices, one of the two first laser radar sub-devices is arranged on the outside of the first vehicle body 42, and the other one of the two first laser radar sub-devices is arranged on the outside of the second vehicle body 43, and the two first laser radar sub-devices are arranged symmetrically about the center point of the inspection device.

The first laser radar device 10 is only installed on the first vehicle body 42 or the second vehicle body 43, and some regions on the inspection device may block the laser beam emitted by the first laser radar device 10. Therefore, when using an inspection device with only one first laser radar device 10, it is necessary to adjust the posture of the inspection device so that there is no obstruction between the first laser radar device 10 and the inspection region. Such an inspection device has poor accuracy and is not conducive to full automation.

Preferably, the first laser radar device 10 is arranged on the outside of the first vehicle body 42 and the outside of the second vehicle body 43. As shown in FIG. 8, the first laser radar sub-device on the first vehicle body 42 and the first laser radar sub-device on the second vehicle body 43 are symmetrical at 180° with respect to the center of the inspection device. The first laser radar sub-device on the first vehicle body 42 is installed at the corner of the first vehicle body 42 and may cover a viewing angle range of 270°. The first laser radar sub-device on the second vehicle body 43 is installed at the corner of the second vehicle body 43 and may cover a viewing angle range of 270°. As shown in FIG. 8, the coverage range of the two first laser radar sub-devices may be complementary, which is more conducive to the detection and checking of the inspection region.

It should be noted that the first laser radar device 10 and the first laser radar sub-device are exactly the same devices. In order to distinguish the two implementation schemes, two naming manners are adopted.

In order to ensure that the inspection device may "ride" through, the present disclosure has certain restrictions on the width and height of the object to be inspected.

According to an embodiment of the present disclosure, the autonomous inspection system further includes: two third laser radar devices (not shown), which are respectively arranged on the inner side of the first vehicle body 42 and on the inner side of the second vehicle body 43, and are used for measuring the width of the object to be inspected.

The third laser radar device is provided on each of two side walls of the passage 401 formed by the first vehicle body 42, the arm 41 and the second vehicle body 43. When the measured width of the object to be inspected is less than the width of the passage 401, the width of the object to be inspected meets a preset size.

According to an embodiment of the present disclosure, the autonomous inspection system further includes: a fourth laser radar device (not shown), which is arranged on the arm 41 and is used for measuring the height of the object to be inspected.

The fourth laser radar device is provided on the upper wall of the passage 401 formed by the first vehicle body 42, the arm 41 and the second vehicle body 43. When the height of the object to be inspected is less than the height of the passage 401, the width of the object to be inspected meets a preset size.

According to an embodiment of the present disclosure, each of the first laser radar device 10 and the second laser radar device 20 is configured as a multi-line laser emitter, and each of the third laser radar device and the fourth laser radar device is configured as a single-line laser emitter.

According to an embodiment of the present disclosure, the inspection device further includes: a radiation source (not shown) and a detector (not shown).

For example, the radiation source is arranged on one of the first vehicle body 42 or the second vehicle body 43, and the radiation source is used to provide X-rays for scanning the object to be inspected. The detector is arranged on the other of the first vehicle body 42 or the second vehicle body 43, and the detector is used to receive X-rays emitted from the radiation source and penetrating the object to be inspected. The radiation source and the detector are arranged opposite to each other, and when the inspection device performs inspection, the object to be inspected is located between the radiation source and the detector.

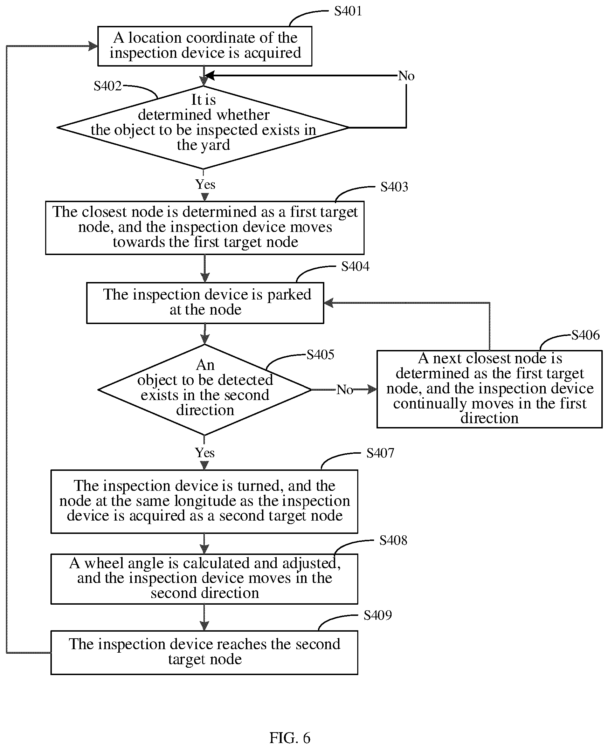

FIG. 6 schematically shows a flow chart of operation and control of an inspection device according to embodiments of the present disclosure.

In operation S401, a location coordinate of the inspection device is acquired.

In operation S402, it is determined whether an object to be inspected exists in a yard or not by using a first laser radar device.

In operation S403, if the object to be inspected exists in the yard, a node closest to the inspection device is determined as a first target node, and the inspection device is moved to the first target node, otherwise return to operation S402.

In operation S404, the inspection device stops at the first target node.

In operation S405, it is determined whether an object to be inspected exists in the second direction or not by using a second laser radar device.

In operation S406, if no object to be inspected exists in the second direction, the next node closest to the inspection device at the same latitude is determined as the first target node, the inspection device is continually moved in the first direction, and then operation S404 is performed.

In operation S407, if an object to be inspected exists in the second direction, the inspection device is turned, and the node at the same longitude as the inspection device is determined as a second target node.

In operation S408, a wheel angle is calculated and adjusted, and the inspection device moves in the second direction.

In operation S409, after the inspection device reaches the second target node, operation S401 is performed.

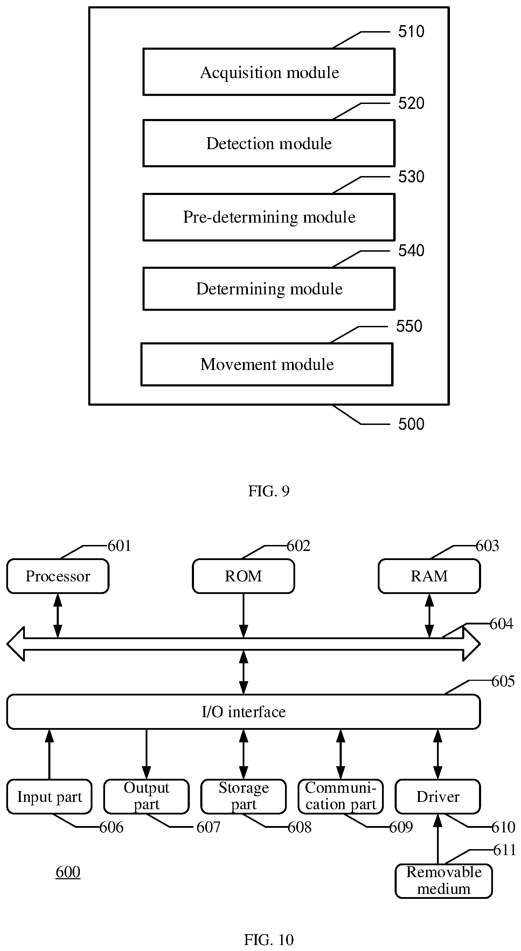

Based on the above autonomous inspection method, the present disclosure also provides an autonomous inspection apparatus of inspection device. The device will be described in detail below in conjunction with FIG. 9.

FIG. 9 schematically shows a structural block diagram of an autonomous inspection apparatus according to embodiments of the present disclosure.

As shown in FIG. 9, the autonomous inspection apparatus 500 of this embodiment includes an acquisition module 510, a detection module 520, a pre-determining module 530, a determining module 540 and a movement module 550.

The acquisition module 510 is used to acquire a location information of the inspection device. In an embodiment, the acquisition module 510 may be used to execute the operation S210 described above, which will not be described in detail herein.

The detection module 520 is used to detect whether an object to be inspected exists in the inspection region or not. In an embodiment, the detection module 520 may be used to execute the operation S220 described above, which will not be described in detail herein.

The pre-determining module 530 is used to pre-determine an orientation of the object to be inspected relative to the inspection device based on the location information of the inspection device, in response to the object to be inspected existing in the inspection region. In an embodiment, the pre-determining module 530 may be used to execute the operation S230 described above, which will not be described in detail herein.

The determining module 540 is used to move the inspection device in a first direction according to the pre-determined orientation, and determine whether the object to be inspected exists in a second direction or not. The second direction is the same as an extension direction of the scanning channel. In an embodiment, the determining module 540 may be used to execute the operation S240 described above, which will not be described in detail herein.

The movement module 550 is used to move the inspection device in the second direction and inspect the object to be inspected, in response to the object to be inspected being detected in the second direction. In an embodiment, the movement module 550 may be used to execute the operation S250 described above, which will not be described in detail herein.

According to the autonomous inspection apparatus of the present disclosure, by pre-determining the orientation of the object to be inspected in the inspection region, and then automatically guiding the inspection device and further positioning the object to be inspected according to the pre-determined orientation, the intelligent positioning and scanning operation of the inspection device in the inspection region may be implemented, so as to improve the inspection efficiency of the object to be inspected, reduce the manual operation processes and labor costs, and provide a solution for implementing unmanned intelligent inspection in the future.

According to embodiments of the present disclosure, any two or more of the acquiring module 510, the detecting module 520, the pre-determining module 530, the determining module 540 and the moving module 550 may be combined into one module for implementation, or any one of the modules may be divided into a plurality of modules. Alternatively, at least part of the functions of one or more of these modules may be combined with at least part of the functions of other modules and implemented in one module. According to embodiments of the present disclosure, at least one of the acquiring module 510, the detecting module 520, the pre-determining module 530, the determining module 540 and the moving module 550 may be implemented at least partially as a hardware circuit, such as a field programmable gate array (FPGA), a programmable logic array (PLA), a system on a chip, a system on a substrate, a system on a package, an application specific integrated circuit (ASIC), or may be implemented by hardware or firmware in any other reasonable manner of integrating or encapsulating the circuit, or may be implemented by any one of the three implementation modes of software, hardware, and firmware or an appropriate combination thereof. Alternatively, at least one of the acquiring module 510, the detecting module 520, the pre-determining module 530, the determining module 540 and the moving module 550 may be at least partially implemented as a computer program module that may perform corresponding functions when executed.

FIG. 10 schematically shows a block diagram of an electronic device suitable for implementing an autonomous inspection method according to embodiments of the present disclosure.

As shown in FIG. 10, an electronic device 600 according to embodiments of the present disclosure includes a processor 601, which may execute various appropriate actions and processes according to the program stored in a read-only memory (ROM) 602 or the program loaded into a random access memory (RAM) 603 from a storage part 608. The processor 601 may, for example, include a general-purpose microprocessor (for example, a CPU), an instruction set processor and/or a related chipset and/or a special-purpose microprocessor (for example, an application specific integrated circuit (ASIC)), and the like. The processor 601 may further include an on-board memory for caching purposes. The processor 601 may include a single processing unit or a plurality of processing units for executing different actions of the method flow according to embodiments of the present disclosure.

Various programs and data required for the operation of the device 600 are stored in the RAM 603. The processor 601, the ROM 602, and the RAM 603 are connected to each other through a bus 604. The processor 601 executes various operations of the method flow according to embodiments of the present disclosure by executing the programs in the ROM 602 and/or the RAM 603. It should be noted that the program may also be stored in one or more memories other than ROM 602 and RAM 603. The processor 601 may also execute various operations of the method flow according to embodiments of the present disclosure by executing programs stored in the one or more memories.

According to embodiments of the present disclosure, the electronic device 600 may further include an input/output (I/O) interface 605 which is also connected to the bus 604. The electronic device 600 may further include one or more of the following components connected to the I/O interface 605: an input part 606 including a keyboard, mouse, etc.; an output part 607 including a cathode ray tube (CRT), a liquid crystal display (LCD), a speaker, etc.; a storage part 608 including a hard disk, etc.; and a communication part 609 including a network interface card, such as a LAN card, a modem, and the like. The communication part 609 performs communication processing via a network such as the Internet. A driver 610 is also connected to the I/O interface 605 as required. A removable medium 611, such as a magnetic disk, an optical disk, a magneto-optical disk, a semiconductor memory, and the like, is installed on the driver 610 as required, so that a computer program to be read therefrom is installed into the storage part 608 as required.

The present disclosure further provides a computer-readable storage medium, which may be included in the device/apparatus/system described in the above embodiments; or exist alone without being assembled into the device/apparatus/system. The above-mentioned computer-readable storage medium carries one or more programs that when executed, perform the methods of embodiments of the present disclosure.

According to embodiments of the present disclosure, the computer-readable storage medium may be a non-volatile computer-readable storage medium, for example, may include but not limited to, a portable computer disk, a hard disk, a random access memory (RAM), a read-only memory (ROM), an erasable programmable read-only memory (EPROM or flash memory), a portable compact disk read-only memory (CD-ROM), an optical memory device, a magnetic memory device, or any suitable combination of the above. In the present disclosure, the computer-readable storage medium may be any tangible medium that contains or stores programs that may be used by or in combination with an instruction execution system, apparatus, or device. For example, according to embodiments of the present disclosure, the computer-readable storage medium may include the above-mentioned ROM 602 and/or RAM 603 and/or one or more memories other than the ROM 602 and RAM 603.

Embodiments of the present disclosure further include a computer program product, which contains a computer program. The computer program contains program code for performing the methods shown in the flowchart. When the computer program product runs in a computer system, the program code causes the computer system to implement the method of embodiments of the present disclosure.

When the computer program is executed by the processor 601, the above-mentioned functions defined in the system/apparatus of embodiments of the present disclosure are performed. According to embodiments of the present disclosure, the above-described systems, apparatuses, modules, units, etc. may be implemented by computer program modules.

In an embodiment, the computer program may rely on a tangible storage medium such as an optical storage device and a magnetic memory device. In another embodiment, the computer program may also be transmitted and distributed in the form of signals on a network medium, downloaded and installed through the communication part 609, and/or installed from the removable medium 611. The program code contained in the computer program may be transmitted by any suitable medium, including but not limited to wireless, wired, or any suitable combination of the above.

In such embodiments, the computer program may be downloaded and installed from the network through the communication part 609, and/or installed from the removable medium 611. When the computer program is executed by the processor 601, the above-mentioned functions defined in the system of embodiments of the present disclosure are performed. According to embodiments of the present disclosure, the above-mentioned systems, devices, apparatuses, modules, units, etc. may be implemented by computer program modules.

According to embodiments of the present disclosure, the program code for executing computer programs provided by embodiments of the present disclosure may be written in any combination of one or more programming languages. In particular, these computing programs may be implemented using high-level procedures and/or object-oriented programming languages, and/or assembly/machine languages. Programming languages include, but are not limited to, Java, C + +, python, the "C" language, or similar programming languages. The program code may be completely executed on the user computing device, partially on the user device, partially on the remote computing device, or completely executed on the remote computing device or server. In a case of involving a remote computing device, the remote computing device may be connected to a user computing device through any kind of network, including a local area network (LAN) or a wide area network (WAN), or may be connected to an external computing device (e.g., through the Internet using an Internet service provider).

The flowcharts and block diagrams in the accompanying drawings illustrate the possible architecture, functions, and operations of the system, method, and computer program product according to various embodiments of the present disclosure. In this regard, each block in the flowcharts or block diagrams may represent a part of a module, a program segment, or a code, which part includes one or more executable instructions for implementing the specified logical function. It should be further noted that, in some alternative implementations, the functions noted in the blocks may also occur in a different order from that noted in the accompanying drawings. For example, two blocks shown in succession may actually be executed substantially in parallel, or they may sometimes be executed in a reverse order, depending on the functions involved. It should be further noted that each block in the block diagrams or flowcharts, and the combination of blocks in the block diagrams or flowcharts, may be implemented by a dedicated hardware-based system that performs the specified functions or operations, or may be performed by a combination of dedicated hardware and computer instructions.

Those skilled in the art may understand that the various embodiments of the present disclosure and/or the features described in the claims may be combined in various ways, even if such combinations are not explicitly described in the present disclosure. In particular, without departing from the spirit and teachings of the present disclosure, the various embodiments of the present disclosure and/or the features described in the claims may be combined in various ways. All these combinations fall within the scope of the present disclosure.

In the description of this specification, the description with reference to the terms "an embodiment", "some embodiments", "example", "specific example", or "some examples" means that the specific features, structures, materials or characteristics described in conjunction with the embodiment or example are included in at least one embodiment or example of the present disclosure. In this specification, the schematic representation of the above terms does not necessarily refer to the same embodiment or example. Moreover, the specific features, structures, materials or characteristics described may be combined in any one or more embodiments or examples in a suitable manner.

Embodiments of the present disclosure have been described above. However, these embodiments are for illustrative purposes only and are not intended to limit the scope of the present disclosure. Although the various embodiments have been described separately above, this does not mean that the measures in the respective embodiments may not be used in combination advantageously. The scope of the present disclosure is defined by the attached claims and their equivalents. Those skilled in the art may make various substitutions and modifications without departing from the scope of the present disclosure, and these substitutions and modifications should all fall within the scope of the present disclosure.

## Claims

1. An autonomous inspection method of an inspection device, the inspection device being movably provided in an inspection region, the inspection region comprising a plurality of scanning channels, and the autonomous inspection method comprising:
acquiring a location information of the inspection device;
detecting whether an object to be inspected exists in the inspection region or not;
pre-determining an orientation of the object to be inspected relative to the inspection device based on the location information of the inspection device, in response to the object to be inspected existing in the inspection region;
moving the inspection device in a first direction according to the pre-determined orientation, and determining whether the object to be inspected exists in a second direction or not, wherein the second direction is the same as an extension direction of the scanning channel; and
moving the inspection device in the second direction and inspecting the object to be inspected, in response to the object to be inspected being detected in the second direction.

2. The autonomous inspection method according to claim 1, wherein the autonomous inspection method further comprises: before detecting whether the object to be inspected exists in the inspection region or not,
creating a topological map according to a coverage area of the inspection region; and
setting nodes at two ends of each of the plurality of scanning channels, wherein a moving path of the inspection device is guided by using the nodes.

3. The autonomous inspection method according to claim 2, wherein the detecting whether an object to be inspected exists in the inspection region or not comprises:
scanning the inspection region by a first laser radar device on the inspection device, wherein the first laser radar device is configured as a multi-line laser transmitter; and
determining that the object to be inspected exists in the inspection region in response to an obstruction being within a scanning range.

4. The autonomous inspection method according to claim 3, wherein the pre-determining an orientation of the object to be inspected relative to the inspection device based on the location information of the inspection device in response to the object to be inspected existing in the inspection region comprises:
determining the orientation of the object to be inspected relative to the inspection device through an orientation blocked by the obstruction;
reading scanning channels in the orientation according to the location information of the inspection device; and
acquiring the nodes of the scanning channels in the orientation.

5. The autonomous inspection method according to claim 4, wherein the moving the inspection device in a first direction according to the pre-determined orientation and determining whether the object to be inspected exists in a second direction or not comprises:
reading first target nodes in the first direction of the inspection device among the nodes of the scanning channels in the orientation one by one;
controlling the inspection device to move in the first direction according to the first target node; and
determining whether the object to be inspected exists in the scanning channel or not by a second laser radar device on the inspection device.

6. The autonomous inspection method according to claim 5, wherein the moving the inspection device in the second direction and inspecting the object to be inspected in response to the object to be inspected being detected in the second direction comprises:
acquiring a second target node in the second direction of the inspection device, in response to the object to be inspected being detected in the scanning channel; and
controlling the inspection device to move in the second direction according to the second target node, and inspecting the object to be inspected.

7. The autonomous inspection method according to claim 6, wherein the autonomous inspection method further comprises: before or when the inspection device moves in the second direction,
adjusting a wheel angle of the inspection device according to an offset distance of the inspection device, wherein the offset distance is calculated by a baseline connecting the nodes at two ends of the scanning channel and a current location information of the inspection device.

8. The autonomous inspection method according to claim 1, wherein the autonomous inspection method further comprises:
measuring a width of the object to be inspected by a third laser radar device on the inspection device;
measuring a height of the object to be inspected by a fourth laser radar device on the inspection device; and
moving the inspection device to a node of a scanning channel where the object to be inspected is located, when the width of the object to be inspected exceeds a preset size and/or the height of the object to be inspected exceeds a preset size.

9. The autonomous inspection method according to claim 2, wherein the topological map comprises a parking point for parking the inspection device.

10. An autonomous inspection apparatus of an inspection device, the inspection device being movably provided in an inspection region, and the autonomous inspection apparatus comprising:
an acquisition module configured to acquire a location information of the inspection device;
a detection module configured to detect whether an object to be inspected exists in the inspection region or not;
a pre-determining module configured to pre-determine an orientation of the object to be inspected relative to the inspection device based on the location information of the inspection device, in response to the object to be inspected existing in the inspection region,
a determining module configured to move the inspection device in a first direction according to the pre-determined orientation, and determine whether the object to be inspected exists in a second direction or not, wherein the second direction is the same as an extension direction of the scanning channel; and
a movement module configured to move the inspection device in the second direction and inspect the object to be inspected, in response to the object to be inspected being detected in the second direction.

11. An electronic device, comprising:
one or more processors; and
a memory configured to store one or more programs,
wherein the one or more programs, when executed by the one or more processors, are configured to cause the one or more processors to implement the autonomous inspection method of any one of claims 1 to 9.

12. A computer readable storage medium having executable instructions stored thereon, wherein the instructions, when executed by a processor, are configured to cause the processor to implement the autonomous inspection method of any one of claims 1 to 9.

13. A computer program product containing a computer program, wherein the computer program, when executed by a processor, is configured to cause the process to implement the autonomous inspection method of any one of claims 1 to 9.
